# EUROPÄISCHE PATENTSCHRIFT

(11) **EP 2 555 910 B1**
(45) Veröffentlichungstag und Bekanntmachung des Hinweises auf die Patenterteilung: **28.11.2018**
(21) Anmeldenummer: 11711939.6
(22) Anmeldetag: 05.04.2011
(51) Int. Cl.: B29C 45/14, B32B 7/02, B32B 27/08, B29C 45/16, B32B 7/12, B32B 25/08, B32B 27/30, B32B 27/32, B32B 27/34, B32B 27/36, B32B 27/40

(54) **Verfahren zum direkten Verkleben eines apolaren Polymerformkörpers mit einem weiteren Substrat und Verwendung eines apolaren Polymerformkörpers**
Process for the direct bonding of an apolar polymer shaped body to another substrate and use of an apolar polymer shaped body
Procédé pour la liaison directe d'un corps formé en polymère apolaire à un autre substrat et utilisation d'un corps formé en polymère apolaire

(30) Priorität: 06.04.2010 EP 10159085
(43) Veröffentlichungstag der Anmeldung: 13.02.2013
(73) Patentinhaber: Nolax AG, 6203 Sempach Station (CH)
(72) Erfinder: PROBST, Werner A., CH-6024 Hildisrieden (CH); TRABER, Bruno, CH-3110 Münsingen (CH)
(74) Vertreter: Hepp Wenger Ryffel AG
(86) Internationale Anmeldenummer: PCT/EP2011/055268
(87) Internationale Veröffentlichungsnummer: WO 2011/124569

(56) Entgegenhaltungen:
- US-A- 6 003 895
- US-B1- 6 399 168
- Anonymous: "Solid surface energy data (SFE) for common polymers", Surface-tension , 20. November 2007 (2007-11-20), Seiten 1-3, XP002599453, Gefunden im Internet: URL:http://www.surface-tension.de/solid-su rface-energy.htm [gefunden am 2010-09-07]

## Beschreibung

Polypropylen und verstärktes Polypropylen sind preiswerte und häufig eingesetzte Kunststoffe für Spritzgussteile. Durch die apolaren Eigenschaften des Polypropylens ist eine Weiterverarbeitung oder Veredelung der Spritzgussteile in den meisten Fällen nicht ohne Vorbehandlung möglich. Vor allem beim Kleben und Lackieren ist eine Vorbehandlung nötig, da sonst die Klebstoffe und Lacke nur ungenügend auf der Oberfläche haften bleiben.
Zur Erhöhung der Oberflächenspannung von apolaren Oberflächen, insbesondere von Polypropylenoberflächen, sind verschiedene Methoden bekannt.
Einerseits kann die Oberfläche durch elektrische Entladungen, wie Corona- oder Plasmaentladungen modifiziert werden. Die DE 3340381 beschreibt beispielsweise, wie die Oberfläche von Polypropylen mittels einer Koronaentladungsbehandlung modifiziert werden kann.
Eine weitere Möglichkeit besteht darin, die Oberfläche mit aggressiven Medien zu aktivieren. Dazu gehört Säureätzen, Ozonolyse, Fluorierung oder das Aufquellen mit Lösungsmitteln. Zum Beispiel beschreiben die CA 876666, US 5302418 oder die US 5200274 verschiedene Behandlungen.

Ferner kann die Oberfläche auch durch Auftragen von Dispersionen, Polymeren und Primern modifiziert werden, wie beispielsweise in der DE 10250067, EP 1190008, DE 10239762 oder EP 1037717 beschrieben.

US6399168 B1 offenbart ein Verfahren zum direkten Verkleben eines apolaren Polymerformkörpers mit einem weiteren Substrat. Weitere bekannte Verfahren sind das Abflammen der Oberfläche oder der Einsatz von Füllstoffen.
Ein starker Nachteil dieser Verfahren besteht jedoch darin, dass ein zusätzlicher Schritt im Produktionsprozess erforderlich ist. Zudem sind zusätzliche, teilweise aufwändige und teure zusätzliche Apparaturen nötig. Vor allem die Behandlung der Oberflächen durch Säuren und Lösungsmittel stellt zudem eine hohe Umweltbelastung dar.
Eine Aufgabe der vorliegenden Erfindung besteht nun darin, die Nachteile des Bekannten zu umgehen und insbesondere ein Verfahren bereit zu stellen, durch welches die Oberfläche eines Polymerformteils aus einem apolaren Polymer mit möglichst wenig Verfahrensschritten verändert werden kann. Die Aufgabe wird mit einem Verfahren gemäss Anspruch 1 und mit einer Verwendung gemäß Anspruch 5 gelöst.
Beim erfindungsgemässen Verfahren wird eine Mehrschichtfolie mit mindestens einer ersten apolaren Schicht und einer zweiten Schicht mit mindestens einer von der ersten Schicht unterschiedlichen Oberflächeneigenschaft hinterspritzt.
Das Hinterspritzen von Folien ist an sich eine bekannte Technologie, bei der zunächst eine Folie in die Kavität eines Spritzgusswerkzeugs eingelegt oder auf die Spritzgussform aufgespannt wird. Die Folie wird in die Kavität gepresst und wird entsprechend der Form der Kavität verformt. Anschliessend wird ein Polymer in die Kavität eingespritzt, wobei sich die gegen das Polymer gewandte Seite der Folie mit dem Polymer verbindet. Dadurch können Formteile erhalten werden, die mit einer Folie überzogen sind. Heutzutage werden vor allem Dekorfolien hinterspritzt, wie z.B. bei der "inmold injection" (IMD) Technik.

Beim erfindungsgemässen Verfahren wird eine Mehrschichtfolie mit mindestens einer apolaren Schicht und mindestens einer zweiten Schicht mit mindestens einer anderen Oberflächeneigenschaft als die erste Schicht derart in die Kavität eines Spritzgusswerkzeugs eingelegt, dass die erste apolare Schicht dem Innenraum der Kavität zugewandt ist während die zweite Schicht auf der Innenwand der Kavität zu liegen kommt. Das apolare Polymer wird dann in den Innenraum der Form gespritzt. Das eingespritzte Polymer sowie die erste apolare Schicht der Mehrschichtfolie stehen in der Form in Berührung und verbinden sich in der Folge.

Die zweite Schicht der Mehrschichtfolie weist mindestens eine Oberflächeneigenschaft auf, die von der ersten apolaren Schicht verschieden ist. Beispielsweise weist die zweite Schicht eine andere Struktur oder Farbe auf als die erste apolare Schicht. Bevorzugt weist die zweite Schicht jedoch eine von der ersten apolaren Schicht unterschiedliche Oberflächenspannung auf. Ganz besonders bevorzugt weist dabei die zweite Schicht polare Eigenschaften auf.

Als apolar im Sinne der Anmeldung wird ein Material und/oder eine Oberfläche verstanden, die eine Oberflächenspannung von weniger als 35mN/m aufweist. Als polar im Sinne der Anmeldung wird ein Material und/oder eine Oberfläche verstanden, die eine Oberflächenspannung von mehr als 37mN/m aufweist. Die Oberflächenspannung lässt sich mit handelsüblichen Testtinten bestimmen. Verschiedene Testreihen sind gemäss der DIN 53364 definiert. Eine andere Möglichkeit zur Bestimmung der Oberflächenspannung besteht im Messen des sog. Kontakt- oder Benetzungswinkels. Dabei wird der Winkel zwischen der Oberfläche und einem Wassertropfen gemessen. Je besser die Benetzbarkeit der Oberfläche desto kleiner der Winkel. Die Messung des Winkels erfolgt dabei beispielsweise durch einen Goniometer.
Die zweite Schicht ist dabei derart gewählt, dass diese als Klebstoff geeignet ist. Beispielsweise kann die zweite Schicht derart zusammengesetzt sein, dass sie unter Hitzeeinwirkung oder durch ein Lösungsmittel aktiviert werden kann. Dies hat den Vorteil, dass ein nach dem Spritzgussverfahren hergestelltes Formteil direkt verklebt werden kann oder Dekor-und weitere Elemente, wie z.B. Haken, angebracht werden können. Alternativ kann die Zusammensetzung auch so gewählt werden, dass die zweite Schicht physikalisch aktiviert werden kann, beispielsweise durch Ultraschall oder Hochfrequenz. Weiter alternativ kann die zweite Schicht auch so ausgestaltet sein, dass sie durch Wärmeeintrag aktiviert werden kann, wie z.B. durch Infrarotstrahlung.
Die zweite Schicht der Mehrschichtfolie umfasst oder besteht bevorzugt aus einem polaren Polymer aus der Gruppe der Polyamide, Copolyamide, Polyester, Copolyester, Polyurethane, Polyetherblockamide, Acrylate oder Polycarbonate oder Mischungen davon.
Besonders bevorzugt umfasst oder besteht die zweite Schicht aus Acrylnitril-Butadien-Styrol-Copolymerisat (ABS) sowie dessen Abmischung mit Polycarbonat (ABS/PC), Polyamid (PA) oder Polyurethan (TPU). ABS und ABS/PC eignen sich hierbei besonders vorteilhaft für nachträgliches Galvanisieren und TPU zeigt eine gute Affinität zu Lacken und Farben.

Das hinterspritze Polymer, also das Polymer aus dem das Polymerformteil besteht, umfasst oder besteht vorzugsweise aus Polypropylen. Das Polypropylen kann auch Füllstoffe, insbesondere Glasfasern, Kreide oder Talk enthalten. Alternativ können als apolares Polymer auch andere schwierig zu verarbeitende Kunststoffe verwendet werden, wie beispielsweise Polyethylen, Polyoxymethylen, thermoplastische Elastomere oder Ethylvinylacetat oder Copolymere und Mischungen davon.
Die erste apolare Schicht der Mehrschichtfolie umfasst oder besteht aus einem apolaren Polymer, insbesondere Polypropylen, modifiziertes Polypropylen, Polyethylen, modifiziertes Polyethylen, Polyoxymethylen, Ethylvinylacetat, Styrolblockcopolymere, Ionomere, Olefine, Kautschuke oder Plastomere sowie Copolymere und Mischungen davon.
Den Polymeren der ersten und der zweiten Schicht können weitere in der Folienindustrie übliche Verarbeitungshilfsmittel und Zusatzstoffe beigemischt werden, wie beispielsweise Füllstoffe oder Farbstoffe.
Alternativ kann die Mehrschichtfolie zwischen der ersten apolaren Schicht und der zweiten Schicht mindestens eine weitere Schicht aufweisen. Diese mindestens eine weitere Schicht kann dabei als Haftvermittler- oder Barriereschicht zwischen der ersten und der zweiten Schicht dienen. Im weiteren kann diese mindestens eine weitere Schicht die Eigenschaften der Mehrschichtfolie zusätzlich verändern, wie beispielsweise die Reissfestigkeit, Dimensionsstabilität, Griffhärte oder Farbe.

Das Spritzgussverfahren zur Herstellung eines Polymerformteils aus einem apolaren Polymer weist insbesondere den Vorteil auf, dass das Formteil ohne weitere Vorbehandlung der Oberfläche mit einem weiteren Substrat verklebt werden kann. Ausserdem lässt sich die Oberfläche leicht optisch und mechanisch veredeln, wie beispielsweise durch Lackieren, Pulverbeschichten, Metallisieren, Galvanisieren sowie mit funktionellen Schutzschichten versehen.

Die Polymerformteile, die mit dem Spritzgussverfahren hergestellt werden, weisen ausserdem eine sehr homogene Oberfläche auf. Insbesondere können auch versteckte Stellen, die durch die herkömmlichen Modifizierungsverfahren nicht oder nur schlecht behandelt werden können, mit den gewünschten Eigenschaften versehen werden.

Eine Mehrschichtfolie gemäß der Offenbarung besteht aus mindestens einer ersten apolaren Schicht und einer zweiten polaren Schicht, wobei die apolare Schicht eine Oberflächenspannung von weniger als 35 mN/m und die polare Schicht eine Oberflächenspannung von mehr als 37 mN/m aufweist. Besonders bevorzugt beträgt dabei die Differenz der Oberflächenspannung der apolaren zur polaren Schicht 5 mN/m oder mehr. Die Polymerzusammensetzung der zweiten Schicht ist so gewählt, dass die zweite Schicht als Klebstoff geeignet ist.

Die Mehrschichtfolie ermöglicht durch die apolare Schicht eine gute Verbindung zu einem Formteil aus einem apolaren Polymer, während die zweite Schicht der Oberfläche des Formteils gute Haftungseigenschaften für Kleber, Lacke und ähnliches verleihen kann. Dadurch wird es möglich, ein Formteil aus einem apolaren Polymer durch einen einfachen Prozess, bevorzugt durch Hinterspritzen, mit einer Oberfläche auszustatten, welche ohne zusätzliche Behandlung zuverlässig verklebt oder lackiert werden kann.
Ferner ist die Polymerzusammensetzung der zweiten Schicht so gewählt werden, dass die zweite Schicht als Klebstoff geeignet ist. Beispielsweise kann die zweite Schicht derart zusammengesetzt sein, dass sie unter Hitzeeinwirkung oder durch ein Lösungsmittel aktiviert werden kann. Dies hat den Vorteil, dass ein nach dem Spritzgussverfahren hergestelltes Formteil direkt verklebt werden kann oder Dekor- und weitere Elemente, wie z.B. Haken, angebracht werden können. Alternativ kann die Zusammensetzung auch so gewählt werden, dass die zweite Schicht physikalisch aktiviert werden kann, beispielsweise durch Ultraschall oder Hochfrequenz. Weiter alternativ kann die zweite Schicht auch so ausgestaltet sein, dass sie durch Wärmeeintrag aktiviert werden kann, wie z.B. durch Infrarotstrahlung.

Die Mehrschichtfolie kann beispielsweise durch ein Extrusionsverfahren einfach hergestellt werden. Solche Verfahren sind dem Fachmann bekannt und beinhalten unter anderem Blasextrusion und Flachfolienextrusion im Coex- und Kaskadeverfahren. Alternativ kann die Mehrschichtfolie auch durch Kaschieren von Ein- und Mehrschichtfolien oder durch Schmelzauftrag auf Einschicht-, Mehrschicht- oder Nicht-Kunststofffolien sowie durch Streichauftrag oder Pulverstreuauftrag hergestellt werden. Durch Variation der verwendeten Polymere, die zur Herstellung der zweiten Schicht verwendet werden, ist es möglich, ohne grossen Aufwand eine Vielzahl von Folien zu produzieren, die über verschiedene Oberflächeneigenschaften verfügen.

Die erste Schicht umfasst oder besteht aus einem apolaren Polymer, bevorzugt Polypropylen, modifiziertes Polypropylen, Polyethylen, modifiziertes Polyethylen, Polyoxymethylen, Ethylvinylacetat, Styrolblockcopolymere, Ionomere, Olefine, Kautschuke oder Plastomere sowie Copolymere davon.

Bevorzugt umfasst oder besteht die zweite Schicht aus einem polaren Polymer, insbesondere aus der Gruppe der Polyamide, Copolyamide, Polyester, Copolyester, Polyurethane, Polyetherblockamide, Acrylate oder Polycarbonate. Besonders bevorzugt umfasst oder besteht die zweite Schicht aus Acrylnitril-Butadien-Styrol-Copolymerisat (ABS) sowie dessen Abmischung mit Polycarbonat (ABS/PC), Polyamid (PA) oder Polyurethan (TPU).

Den Polymeren der ersten und der zweiten Schicht können weitere in der Folienindustrie übliche Verarbeitungshilfsmittel und Zusatzstoffe beigemischt werden, wie beispielsweise Füllstoffe oder Farbstoffe.

Alternativ kann die Mehrschichtfolie zwischen der ersten apolaren Schicht und der zweiten Schicht mindestens eine weitere Schicht aufweisen. Diese mindestens eine Schicht kann dabei als Haftvermittler- oder Barriereschicht zwischen der ersten und der zweiten Schicht dienen. Im weitern kann diese mindestens eine weitere Schicht die Eigenschaften der Mehrschichtfolie zusätzliche verändern, wie beispielsweise die Reissfestigkeit, Dimensionsstabilität, Griffhärte oder Farbe. In einer bevorzugten Ausführungsform besteht die Folie aus einer ersten apolaren Schicht, einer Schicht aus einem Haftvermittler sowie einer zweiten polaren Schicht. In einer weiteren bevorzugten Ausführungsform besteht die Folie aus einer ersten apolaren Schicht, einer Haftvermittlerschicht, einer Schicht aus einem Elastomer, einer zweiten Haftvermittlerschicht sowie einer zweiten polaren Schicht.

Die Mehrschichtfolie weist (insbesondere aufgrund der Herstellung mittels Coextrusion) zudem die vorteilhafte Eigenschaft auf, dass die einzelnen Schichten sehr gut aufeinander haften, so dass sie nur unter Zerstörung der Folie getrennt werden können.

Die Verwendung einer Mehrschichtfolie in einem Hinterspritzverfahren zur Herstellung eines Polymerformteils ist besonders vorteilhaft. Die Mehrschichtfolie lässt sich leicht herstellen. Zudem können durch Variation der verwendeten Polymere für die erste apolare Schicht die Haftungseigenschaften zum Formteil einerseits und andererseits durch Variation der Polymere der zweiten Schicht die Oberflächeneigenschaften des fertigen Formteils beeinflusst werden. Das Hinterspritzen von Folien ist ein bekanntes Verfahren, so dass eine Vielzahl dazu notwendiger Geräte auf dem Markt erhältlich sind.

Weitere Vorteile und Einzelmerkmale der Erfindung ergeben sich aus der nachfolgenden Beschreibung von Ausführungsbeispielen und aus den Figuren. Es zeigen:
- Fig. 1:: Eine Ausführungsform einer Mehrschichtfolie im Schnitt
- Fig. 2:: Eine Ausführungsform eines Polymerformteils im Schnitt
- Fig. 3:: Eine Ausführungsform eines Spritzgussverfahrens im Schnitt

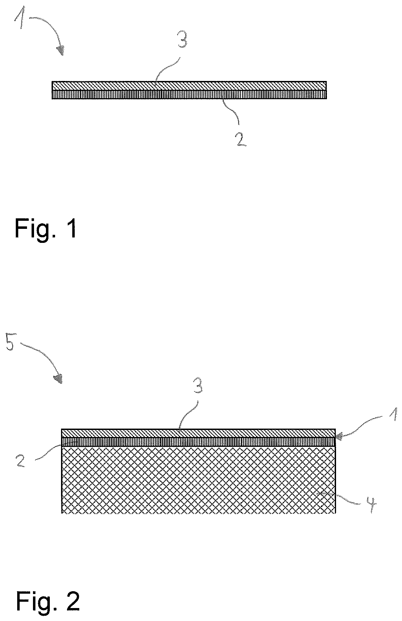

In Figur 1 ist beispielhaft eine Ausführungsform einer Mehrschichtfolie 1 im Schnitt dargestellt. Die Mehrschichtfolie 1 besteht dabei aus einer ersten apolaren Schicht 2 und mindestens einer zweiten Schicht 3. Die zweite Schicht 3 weist dabei von der ersten Schicht 2 mindestens eine unterschiedliche Oberflächeneigenschaft auf. Zwischen der ersten Schicht 2 und der zweiten Schicht 3 kann alternativ mindestens eine weitere Schicht vorhanden sein. Die Dicke der Mehrschichtfolie 1 sowie der einzelnen Schichten 2,3 kann dabei je nach Anwendung variieren. Auch kann die Mehrschichtfolie 1 in verschiedenen Formen vorliegen, wie beispielsweise als einzelne Bogen, als Rolle oder als Zuschnitt mit definiertem Umriss.
Beispielsweise besteht die Mehrschichtfolie 1 aus einer apolaren Schicht 2 aus Polypropylen, einer Haftvermittlerschicht aus einem Polyamid sowie einer polaren Schicht 3 aus einem Polyurethan. Ferner kann die Mehrschichtfolie beispielsweise zwischen der apolaren Schicht 2 und der polaren Schicht 3 mehrere Zwischenschichten aufweisen. Beispielsweise kann die Mehrschichtfolie 1 aus einer apolaren Schicht 2 aus Polyethylen, einer Haftvermittlerschicht aus Ethylenvinylacetat, einer elastomeren Schicht aus Ethylen-Vinyl-Kautschuk, einer weiteren Haftvermittlerschicht aus Ethylenvinylacetet sowie einer zweiten, polaren Schicht 3 aus einem Polyamid bestehen.

Figur 2 zeigt eine Ausführungsform eines Polymerformkörpers 5. Der Polymerformkörper umfasst dabei eine durch ein apolares Polymer 4 hinterspritzte Mehrschichtfolie 1. Die apolare erste Schicht 2 der Mehrschichtfolie 1 ist dabei dem Polymer 4 zugewendet, während die zweite Schicht 3 auf der (freiliegenden) Oberfläche des Polymerformkörpers 5 angeordnet ist. Alternativ kann ein Polymerformkörper 5 auch durch Hinterspritzen einer Mehrschichtfolie 1, die zwischen der ersten Schicht 2 und der zweiten Schicht 3 noch mindestens eine weitere Schicht aufweist, bestehen. Der Polymerformkörper 5 kann verschiedene Formen und Konturen aufweisen. Beispielsweise kann der Polymerformkörper 5 in Form eines Armaturenbretts für ein Kraftfahrzeug vorliegen.

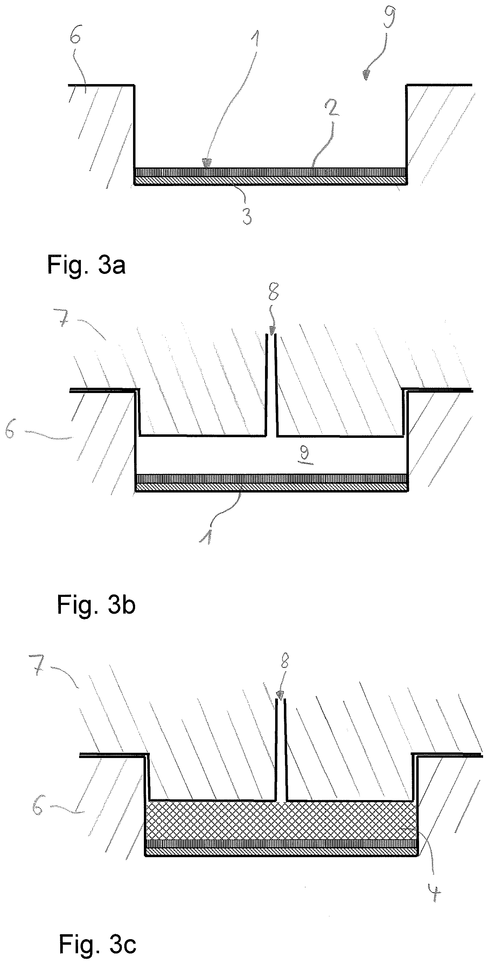

Figur 3 zeigt eine Ausführungsform eines Spritzgussverfahrens. Wie in Figur 3a gezeigt, wird zunächst eine Mehrschichtfolie 1 in die Kavität 9 eines Spritzgusswerkzeugs 6 eingelegt. Bevorzugt wird dabei ein Spritzgusswerkzeug mit Vakuumtiefziehmöglichkeit eingesetzt, so dass sich die Mehrschichtfolie 1 gut an die Wand der Kavität 9 anschmiegen kann. Die erste apolare Schicht 2 der Mehrschichtfolie 1 zeigt dabei in Richtung der Kavität 9, während die zweite Schicht 3 gegen die Wand des Spritzgusswerkzeugs 6 gerichtet ist. Die Form der Kavität 9 richtet sich nach der Form des zu produzierenden Formteils. Figur 3b zeigt den nächsten Schritt, wo der Zylinder 7 des Spritzgusswerkzeugs 6 auf die Kavität 9 abgesenkt wird. Durch den Einspritzkanal 8 kann anschliessend ein Polymer 4 in die Kavität 9 eingespritzt werden. Den Zustand nach dem Einspritzen des Polymers 4 zeigt Figur 3c. Da die erste apolare Schicht 2 und das apolare Polymer 4 ähnliche oder identische Oberflächeneigenschaften zeigen, entsteht zwischen der Mehrschichtfolie 1 und dem Polymer 4 eine starke Verbindung. Die Mehrschichtfolie 1 lässt sich dank dieser starken Verbindung nicht mehr vom Polymer 4 lösen, ohne dass dabei das Polymerformteil 5 zerstört wird. Somit ermöglicht das Spritzgussverfahren eine dauerhafte Modifikation der Oberfläche eines Polymerformkörpers aus apolarem Polymer.

### Beispiel 1:

Eine Mehrschichtfolie 1 bestehend aus einer ersten, apolaren Schicht 2 aus Maleinsäureanhydrid-gepfropften Polypropylen (30 g/m²) und einer zweiten, polaren Schicht 3 aus einem Copolyamid (10 g/m²) wurde durch Polypropylen zu einem Formkörper hinterspritzt.

### Beispiel 2:

Eine Mehrschichtfolie 1 bestehend aus einer ersten, apolaren Schicht 2 aus einem Plastomer (10 g/m²), einer Haftvermittlerschicht aus MAH-gepfropftem Polyethylen (5 g/m²) und einer zweiten, polaren Schicht 3 aus Polyamid (5 g/m²) wurde durch Polypropylen zu einem Formteil hinterspritzt.

## Patentansprüche

1. Verfahren zum direkten Verkleben eines apolaren Polymerformkörpers (5) mit einem weiteren Substrat, wobei der Polymerformkörper (5) aus einer mit einem apolaren Polymer hinterspritzten Mehrschichtenfolie (1) besteht, wobei die Mehrschichtenfolie (1) mindestens
- eine erste apolare Schicht (2), welche dem Polymer (4) des Formkörpers (5) zugewandt ist, und
- eine zweite Schicht (3), mit mindestens einer von der ersten Schicht unterschiedlichen Oberflächeneigenschaft, welche eine als Klebstoff geeignete Polymerzusammensetzung aufweist,
enthält, wobei vor dem Verkleben die zweite Schicht (3) aktiviert wird.

2. Verfahren gemäss Anspruch 1, **dadurch gekennzeichnet, dass** die zweite Schicht (3) durch Einwirkung von Hitze, durch Wärmeeintrag oder physikalisch aktiviert wird.

3. Verfahren gemäss Anspruch 1, **dadurch gekennzeichnet, dass** die zweite Schicht (3) durch ein Lösungsmittel aktiviert wird.

4. Verfahren gemäss Anspruch 1, **dadurch gekennzeichnet, dass** die zweite Schicht (3) durch Ultraschall oder einer Hochfrequenz aktiviert wird.

5. Verwendung eines apolaren Polymerformkörpers (5) bestehend aus einer mit einem apolaren Polymer (4) hinterspritzten Mehrschichtenfolie (1) mit mindestens einer ersten apolaren Schicht (2), welche dem Polymer (4) des Polymerformkörpers (5) zugewandt ist, und einer zweiten Schicht (3), mit mindestens einer von der ersten Schicht unterschiedlichen Oberflächeneigenschaft, welche eine als Klebstoff geeignete Polymerzusammensetzung aufweist, zum direkten Verkleben auf ein weiteres Substrat, wobei vor dem Verkleben eine Aktivierung der zweiten Schicht (3) erfolgt.

## Claims

1. Process for the direct adhesive bonding of an apolar polymer molding (5) to a further substrate, where the polymer molding (5) consists of a multilayer foil (1) back-injected with an apolar polymer, wherein the multilayer foil (1) comprises at least
- one first apolar layer (2) which faces toward the polymer (4) of the molding (5), and
- a second layer (3), with at least one surface property different from the first layer, which comprises a polymer composition suitable as adhesive,
wherein the second layer (3) is activated prior to the adhesive bonding process.

2. Process according to Claim 1, **characterized in that** the second layer (3) is activated by exposure to heat, by introduction of heat, or physically.

3. Process according to Claim 1, **characterized in that** the second layer (3) is activated by a solvent.

4. Process according to Claim 1, **characterized in that** the second layer (3) is activated by ultrasound or by high frequency.

5. Use of an apolar polymer molding (5) consisting of a multilayer foil (1) back-injected with an apolar polymer (4) and with at least one first apolar layer (2) which faces toward the polymer (4) of the polymer molding (5), and a second layer (3), with at least one surface property different from the first layer, which comprises a polymer composition suitable as adhesive, for direct adhesive bonding to a further substrate, wherein activation of the second layer (3) takes place prior to the adhesive bonding process.

## Revendications

1. Procédé de collage direct d'un corps moulé polymère apolaire (5) avec un autre substrat, le corps moulé polymère (5) étant constitué par un film multicouche (1) surmoulé avec un polymère apolaire, le film multicouche (1) étant constitué
- au moins une première couche apolaire (2), qui est orientée vers le polymère (4) du corps moulé (5), et
- une deuxième couche (3), ayant au moins une propriété de surface différente de la première couche, qui comprend une composition polymère appropriée en tant qu'adhésif,
**caractérisé en ce que** la deuxième couche (3) est activée avant le collage.

2. Procédé selon la revendication 1, **caractérisé en ce que** la deuxième couche (3) est activée sous l'effet de chaleur, par apport de chaleur ou physiquement.

3. Procédé selon la revendication 1, **caractérisé en ce que** la deuxième couche (3) est activée par un solvant.

4. Procédé selon la revendication 1, **caractérisé en ce que** la deuxième couche (3) est activée par des ultrasons ou une fréquence élevée.

5. Utilisation d'un corps moulé polymère apolaire (5) constitué par un film multicouche (1) surmoulé avec un polymère apolaire (4) comprenant au moins une première couche apolaire (2), qui est orientée vers le polymère (4) du corps moulé polymère (5), et une deuxième couche (3), ayant au moins une propriété de surface différente de la première couche, qui comprend une composition polymère appropriée en tant qu'adhésif, pour le collage direct sur un autre substrat, une activation de la deuxième couche (3) ayant lieu avant le collage.
